# FASCICULE DE BREVET EUROPEEN

(11) **EP 3 311 231 B1**
(45) Date de publication et mention de la délivrance du brevet: **27.03.2019**
(21) Numéro de dépôt: 16730705.7
(22) Date de dépôt: 02.06.2016
(51) Int. Cl.: G05B 19/042, G05B 19/05, G06F 1/30

(54) **SYSTÈME D'ALIMENTATION ÉLECTRIQUE POUR AUTOMATE PROGRAMMABLE**
STROMVERSORGUNGSSYSTEM FÜR EIN SPEICHERPROGRAMMIERBARES STEUERGERÄT
ELECTRICAL POWER SUPPLY SYSTEM FOR A PROGRAMMABLE LOGIC CONTROLLER

(30) Priorité: 17.06.2015 FR 1555533
(43) Date de publication de la demande: 25.04.2018
(73) Titulaire: Schneider Electric Industries SAS, 92500 Rueil-Malmaison (FR)
(72) Inventeur: TONET, Richard, 06650 Le Rouret (FR)
(74) Mandataire: van Buul, Bastiaan Richard Marinus
(86) Numéro de dépôt international: PCT/EP2016/062542
(87) Numéro de publication internationale: WO 2016/202603

(56) Documents cités:
- CN-A- 104 035 324
- US-A- 5 761 529
- US-A1- 2009 158 070

## Description

### Domaine technique de l'invention

La présente invention se rapporte à un système d'alimentation électrique pour automate programmable. Le système d'alimentation électrique présente la particularité de comporter deux modules d'alimentation électrique en redondance.

### Etat de la technique

Dans une application de sécurité, il est nécessaire de sécuriser l'alimentation électrique de l'automate programmable chargé de la commande de l'application de sécurité. Pour cela, deux modules d'alimentation électrique sont souvent employés en redondance, un module d'alimentation électrique principal, configuré en tant que maître, et un module d'alimentation électrique de secours, configuré en tant qu'esclave. De cette manière, en cas de défaillance du module d'alimentation électrique principal, le module d'alimentation électrique de secours est chargé de prendre le relais. Dans ce type d'architecture, il est courant que les deux modules d'alimentation électrique se partagent la fourniture du courant. Le module d'alimentation électrique de secours vieillit malgré tout. Ainsi, lors d'une défaillance du module d'alimentation électrique principal, rien n'assure que le module d'alimentation électrique de secours soit en mesure de prendre le relais.
Le document US2009/158070A1 décrit pour sa part une solution de redondance entre plusieurs modules d'alimentation. La solution proposée consiste à déterminer le mode de fonctionnement en redondance du système en mesurant la tension d'entrée disponible à l'entrée de chaque module.

Le but de l'invention est de proposer un système d'alimentation électrique comprenant un premier module d'alimentation électrique configuré en tant que maître et un deuxième module d'alimentation électrique configuré en tant qu'esclave et qui permette d'assurer l'alimentation de l'automate programmable dans toutes les conditions.

### Exposé de l'invention

Ce but est atteint par un système d'alimentation électrique pour automate programmable comprenant :
- un premier module d'alimentation électrique configuré dans un mode maître pour fournir au moins une tension d'alimentation électrique à l'automate programmable,
- un deuxième module d'alimentation électrique configuré dans un mode esclave pour fournir ladite tension d'alimentation électrique à l'automate programmable en cas de défaillance du premier module d'alimentation électrique,
caractérisé en ce qu'il comporte :
- un module de commande agencé pour commander de manière temporaire le basculement du premier module d'alimentation électrique en mode esclave et le basculement du deuxième module d'alimentation électrique en mode maître,
- un module de test agencé pour tester le deuxième module d'alimentation électrique lorsque celui-ci est basculé en mode maître.

Dans la solution décrite dans le document US2009/158070A1, il s'agit uniquement de déterminer le mode de fonctionnement en redondance du système d'alimentation. La solution proposée ne permet pas de s'assurer que chaque module esclave reste capable de devenir le module maître lorsque ce sera nécessaire.

Selon une particularité, le module de test comporte :
- un module de mesure agencé pour mesurer le courant électrique délivré par le deuxième module d'alimentation électrique lorsque celui-ci est en mode maître,
- un module de comparaison du courant électrique mesuré avec une valeur seuil minimale nécessaire à l'alimentation de l'automate programmable.

Selon une particularité, le module de test est intégré au deuxième module d'alimentation électrique.

Selon une autre particularité, le module de test est lancé de manière cyclique par le deuxième module d'alimentation électrique.

Selon une autre particularité, le module de test du deuxième module d'alimentation électrique comporte un module de mesure de la tension fournie par le module et un module de comparaison de ladite tension mesurée avec au moins une valeur seuil.

Selon une autre particularité, la valeur seuil est déterminée en fonction du mode de fonctionnement maître ou esclave dans lequel est le module.

Selon une autre particularité, le premier module d'alimentation électrique comporte un module de test comprenant un module de mesure de la tension fournie par le module et un module de comparaison de ladite tension mesurée avec au moins une valeur seuil. La valeur seuil est déterminée en fonction du mode de fonctionnement maître ou esclave dans lequel est le module.

### Brève description des figures

D'autres caractéristiques et avantages vont apparaître dans la description détaillée qui suit faite en regard des dessins annexés dans lesquels :
- la figure 1 représente l'architecture du système d'alimentation électrique de l'invention,
- la figure 2 illustre le procédé de commande mis en oeuvre dans le système d'alimentation électrique de l'invention.

### Description détaillée d'au moins un mode de réalisation

Le système d'alimentation électrique de l'invention est destiné à l'alimentation électrique d'un automate programmable.

De manière connue, un automate programmable comporte par exemple plusieurs modules connectés entre eux à travers un bus 3 de type fond de panier (« backplane »). L'automate programmable comporte notamment un module unité centrale 4 et plusieurs modules d'entrées/sorties 5. Pour fonctionner, l'automate programmable comporte un système d'alimentation électrique fournissant au moins une tension électrique d'alimentation à tous les modules. La tension électrique d'alimentation est appliquée sur le bus 3 fond de panier par le système d'alimentation électrique.

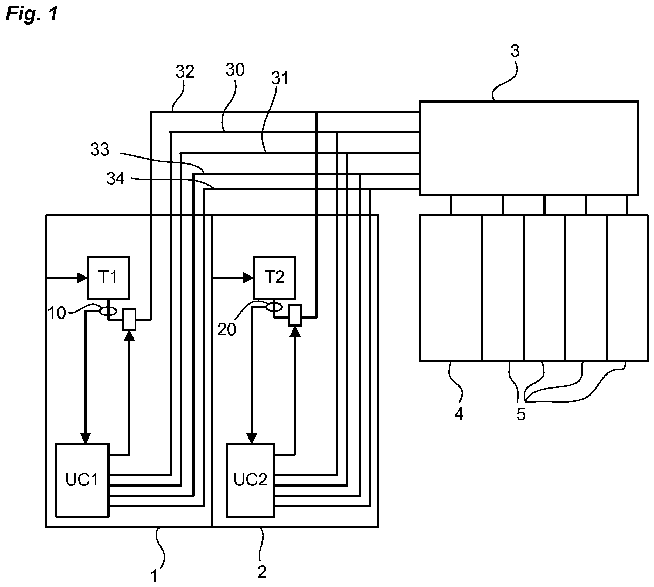

En référence à la figure 1, le système d'alimentation électrique de l'invention comporte un premier module d'alimentation électrique 1 et un deuxième module d'alimentation électrique 2. Les deux modules 1, 2 sont associés en redondance de manière à toujours fournir au moins une tension électrique nécessaire à l'alimentation électrique de l'automate programmable.

Les modules 1, 2, 4, 5 de l'automate sont par exemple tous connectés au bus 3 fond de panier par l'intermédiaire d'un connecteur par lequel transitent les alimentations électriques et les données échangées entre les modules. A travers le bus, les modules communiquent entre eux grâce à un protocole de communication, par exemple de type I2C (« Inter Integrated Circuit »).

Le premier module d'alimentation électrique 1 et le deuxième module d'alimentation électrique 2 comportent chacun un microcontrôleur, désigné respectivement premier microcontrôleur UC1 et deuxième microcontrôleur UC2. Chaque microcontrôleur comporte un module de communication agencé pour envoyer/recevoir des messages à travers le bus 3 selon le protocole de communication choisi.

Sur la figure 1 annexée, le bus 3 fond de panier comporte notamment :
- deux lignes 30, 31 destinées à la communication entre les deux microcontrôleurs des modules (bus de type I2C)
- une ligne 32 d'alimentation électrique sur laquelle les deux modules appliquent une tension pour alimenter les modules de l'automate programmable,
- une ligne 33 sur laquelle chaque microcontrôleur du système peut émettre un signal à destination du module unité centrale pour l'informer qu'il n'est plus capable d'assurer la redondance sur l'alimentation,
- une ligne 34 sur laquelle chaque microcontrôleur du système informe le module unité centrale et les autres modules de l'automate programmable qu'ils sont capables de fournir les tensions demandées.

Dans le système d'alimentation électrique de l'invention, l'un des modules est configuré en mode maître (M) et l'autre est configuré en mode esclave (S). Les deux modules fournissent la tension mais, contrairement à certaines solutions antérieures, seul le module qui est en mode maître contrôle le courant fourni pour l'alimentation de l'automate programmable.

Le mode maître et le mode esclave sont configurés sur chaque module de manière matérielle. La configuration en mode maître ou en mode esclave est déterminée par une valeur A, égale à 1 ou 0, prise par un bit lu par le microcontrôleur de chaque module. Lorsque le bit A prend la valeur 0, le module est en mode maître et lorsque le bit A prend la valeur 1, le module est en mode esclave.

Le premier module d'alimentation électrique 1 comporte une entrée d'alimentation destinée à être connectée au réseau électrique et recevant une tension d'alimentation de ce réseau. Un transformateur T1 présent dans le module permet de convertir la tension du réseau en une ou plusieurs tensions pour l'alimentation électrique de l'automate programmable et éventuellement des capteurs ou actionneurs connectés aux modules d'entrées/sorties de l'automate.

Le premier module d'alimentation électrique 1 comporte des moyens de mesure des tensions fournies par le module et des courants 10 générés par le module d'alimentation électrique pour chaque tension appliquée par le module. Ces moyens de mesure comportent notamment un module logiciel de mesure présent dans le premier microcontrôleur et recevant des données analogiques de mesure des tensions et des courants.

Le premier microcontrôleur comporte un module de test des tensions et courants fournis par le module. Le module de test comporte notamment un premier module de comparaison agencé pour vérifier que chaque tension est comprise entre une valeur seuil basse et une valeur seuil haute et donc conforme au mode de fonctionnement maître ou esclave du module. Les valeurs seuils haute et basse sont définies et distinctes pour chacun des modes de fonctionnement maître ou esclave du module.

Le module de test comporte un deuxième module de comparaison agencé pour vérifier que chaque courant fourni pour chaque tension appliquée est supérieur à une valeur seuil prédéterminée, ladite valeur seuil étant définie comme suffisante pour le fonctionnement des composants alimentés lorsque le module est en mode maître.

Le premier microcontrôleur UC1 comporte un module de commande agencé pour envoyer un signal de commande en vue d'appliquer une tension sur le bus 3, correspondant au mode maître ou esclave dans lequel est configuré le module.

Le deuxième module d'alimentation électrique 2 comporte une entrée d'alimentation destinée à être connectée au réseau électrique et recevant une tension d'alimentation de ce réseau. Un transformateur T2 présent dans le module permet de convertir la tension du réseau en une ou plusieurs tensions pour l'alimentation électrique de l'automate programmable et éventuellement des capteurs ou actionneurs connectés aux modules d'entrées/sorties de l'automate.

Le deuxième module d'alimentation électrique 2 comporte des moyens de mesure des tensions fournies par le module et des courants 20 générés par le module d'alimentation électrique pour chaque tension appliquée par le module. Ces moyens de mesure comportent notamment un module logiciel de mesure présent dans le microcontrôleur et recevant des données analogiques de mesure des tensions et des courants. Le deuxième microcontrôleur UC2 comporte un module de test des tensions et courants fournis par le module. Le module de test comporte notamment un premier module de comparaison agencé pour vérifier que chaque tension est comprise entre une valeur seuil basse et une valeur seuil haute et donc conforme au mode de fonctionnement maître ou esclave du module. Le module de test comporte un deuxième module de comparaison agencé pour vérifier que chaque courant fourni pour chaque tension appliquée est supérieure à une valeur seuil prédéterminée, ladite valeur seuil étant définie comme suffisante pour le fonctionnement des composants alimentés lorsque le module est en mode maître.

Le deuxième microcontrôleur UC2 comporte un module de commande agencé pour envoyer un signal de commande en vue d'appliquer une tension sur le bus 3 correspondant au mode maître ou esclave dans lequel est configuré le module.

Lorsqu'un module d'alimentation électrique est configuré en mode maître, il est apte à fournir une tension dite haute (H pour « High ») et lorsqu'il est configuré en mode esclave, il est apte à fournir une tension dite basse (L pour « Low »). Dans la suite de la description et sur les figures, on considérera que chaque module est apte à fournir deux tensions 24V et 3.3V, déclinées en 24V H, 24V L et 3.3V H, 3.3V L.

Les deux microcontrôleurs UC1, UC2 sont notamment agencés pour communiquer entre eux et pour commander la mise en place d'un test temporaire du module d'alimentation électrique configuré en mode esclave. Le test peut être lancé de manière périodique ou à la discrétion des deux modules. D'une manière générale, le test consiste à basculer le deuxième module d'alimentation électrique en mode maître et le premier module d'alimentation électrique en mode esclave puis à mesurer le courant fourni par le deuxième module et à le comparer avec celui mesuré précédemment pour le premier module. Si les valeurs sont équivalentes, cela signifie que le deuxième module est toujours fonctionnel et prêt à prendre le relais du premier module en cas de défaillance de celui-ci. Une fois le test terminé, chaque module d'alimentation électrique revient dans sa configuration initiale, c'est-à-dire que le premier module repasse en mode maître et le deuxième module repasse en mode esclave.

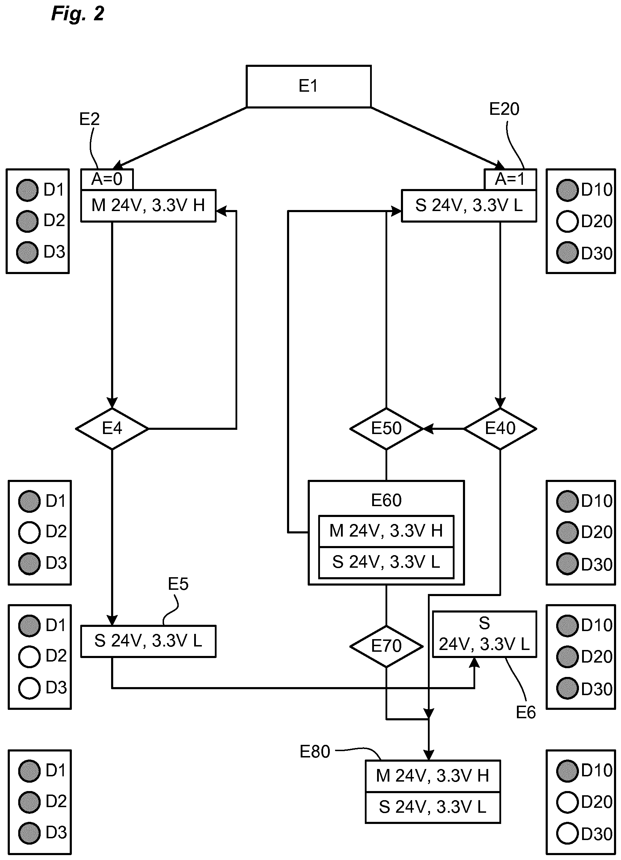

De manière plus précise, l'algorithme mis en oeuvre est représenté sur la figure 2. Chaque module comporte par exemple trois voyants de signalisation, par exemple des diodes électroluminescentes, destinés à informer des différents états de fonctionnement. Pour les deux modules, un premier voyant D1, D10 est allumé pour informer que le module fonctionne correctement. Un deuxième voyant D2, D20 est allumé pour indiquer que le module est en mode maître. S'il est éteint, cela signifie que le module est en mode esclave. Un troisième voyant D3, D30 est destiné à indiquer l'état de la redondance. Si ce voyant est éteint, cela signifie que le module est défaillant et qu'il n'est donc pas apte à opérer la redondance.

A partir de ces différents éléments, l'algorithme mis en oeuvre est le suivant :
E1 : La première étape consiste en la mise sous tension du système d'alimentation électrique.
E2 et E20 : Le premier module d'alimentation électrique 1 est configuré en mode maître (A=0) et le deuxième module d'alimentation électrique 2 est configuré en mode esclave (A=1). Le premier module d'alimentation électrique 1 est alors apte à fournir les tensions 24V H et 3.3V H et le deuxième module d'alimentation électrique 2 est alors apte à fournir les tensions 24V L et 3.3V L. Le voyant D2 est allumé pour le premier module 1 et le voyant D20 est éteint pour le deuxième module 2.
E4 : Le premier microcontrôleur UC1 du premier module 1, configuré en mode maître, lance son module de test de manière à vérifier que les tensions et les courants fournis par le module sont bien compris entre les valeurs seuils définies pour le mode maître. Si tout est conforme, le premier module 1 reste dans la même configuration. Ce module de test est lancé cycliquement par le premier microcontrôleur UC1.
E5 : En revanche, si une tension n'est pas conforme ou si un courant fourni est insuffisant, le premier module 1 est basculé en mode esclave. Le premier microcontrôleur commande l'extinction du deuxième voyant D2. Le premier module 1 est alors configuré de manière à fournir les tensions 24V L et 3.3V L.
E6 : Le premier microcontrôleur UC1 informe le deuxième microcontrôleur UC2 que le deuxième module 2 doit être configuré en mode maître. Le deuxième microcontrôleur UC2 commande le basculement du deuxième module 2 en mode maître et l'allumage du deuxième voyant D20. Le deuxième module 2 est alors configuré pour fournir les tensions 24V H et 3.3V H.
E40 : Comme dans le premier module, le deuxième microcontrôleur UC2 est agencé pour lancer cycliquement son module de test sur les tensions que le deuxième module 2 est capable de fournir. Le test consiste à comparer les deux tensions 24V et 3.3V par rapport aux deux valeurs seuils haute et basse définies ci-dessus.

Si les tensions mesurées ne sont pas acceptables, le deuxième module 2 reste en mode esclave et le deuxième microcontrôleur UC2 commande l'extinction du troisième voyant D30, indiquant que le deuxième module ne peut assurer la redondance (E80).
E50 : En revanche, si les tensions mesurées sont bien dans les limites prédéfinies, les deux microcontrôleurs UC1, UC2 sont agencés pour décider de la mise en place ou non d'un test du deuxième module 2, configuré en mode esclave. Ce test est par exemple réalisé de manière cyclique.

Si le test n'est pas demandé, le deuxième module 2 reste en mode esclave (étape E20).
E60 : Si le test est demandé, le premier microcontrôleur UC1 lance un module de commande pour commander le basculement temporaire du premier module 1 en mode esclave et le deuxième microcontrôleur UC2 lance un module de commande pour commander le basculement temporaire du deuxième module 2 en mode maître.
E70 : Le deuxième microcontrôleur UC2 lance son module de test pour la mesure des courants que le deuxième module 2 est capable de fournir lorsque les tensions sont à 3.3V et à 24V. Le test consiste à comparer le courant mesuré avec une valeur de courant fournie par le premier module lorsque celui-ci est en mode maître. Cette dernière valeur de courant a par exemple été mémorisée précédemment par le premier module 1 et envoyée au deuxième module 2 lorsque le test est commandé.

Si le test a un résultat positif, alors le deuxième module 2 revient en mode esclave et le premier module 1 revient en mode maître (on revient ainsi aux étapes E2 et E20).
E80 : Si le test a au moins un résultat négatif, cela signifie que le deuxième module 2 est défaillant et qu'il ne pourra assurer la redondance. Le premier microcontrôleur UC1 commande le passage du premier module 1 en mode maître et le deuxième microcontrôleur UC2 commande le passage du deuxième module 2 en mode esclave. Le deuxième microcontrôleur UC2 commande l'extinction du troisième voyant D30, indiquant que le deuxième module 2 ne pourra assurer la redondance.

Selon l'invention, les deux microcontrôleurs UC1, UC2 échangent des messages à travers le bus. Le système de l'invention prévoit que si le module configuré en mode maître ne répond pas au module esclave après une durée prédéterminée, le module esclave passe automatiquement en mode maître.

Selon l'invention, lorsqu'un module d'alimentation électrique, qui est alors configuré en mode maître, est défaillant, l'autre module d'alimentation électrique prend le relais et est configuré pour passer du mode esclave au mode maître. Le module défaillant est remplacé par nouveau module qui est alors configuré en mode esclave. Même s'il remplace un module qui était initialement en mode maître, le nouveau module n'est pas configuré en mode maître, mais en mode esclave.

La solution de l'invention présente donc de nombreux avantages, parmi lesquels :
- tester le module esclave de manière cyclique permet d'assurer une alimentation électrique, même en cas de défaillance du module maître,
- forcer le vieillissement du module maître et préserver le module esclave,
- signaler la défaillance d'un module.

## Revendications

1. Système d'alimentation électrique pour automate programmable comprenant :
- un premier module d'alimentation électrique (1) configuré dans un mode maître pour fournir au moins une tension d'alimentation électrique à l'automate programmable,
- un deuxième module d'alimentation électrique (2) configuré dans un mode esclave pour fournir ladite tension d'alimentation électrique à l'automate programmable en cas de défaillance du premier module d'alimentation électrique,
**caractérisé en ce qu'**il comporte :
- un module de commande agencé pour commander de manière temporaire le basculement du premier module d'alimentation électrique (1) en mode esclave et le basculement du deuxième module d'alimentation électrique (2) en mode maître,
- un module de test agencé pour tester en courant le deuxième module d'alimentation électrique (2) lorsque celui-ci est basculé en mode maître.

2. Système selon la revendication 1, **caractérisé en ce que** le module de test comporte :
- un module de mesure agencé pour mesurer le courant électrique délivré par le deuxième module d'alimentation électrique (2) lorsque celui-ci est en mode maître,
- un module de comparaison du courant électrique mesuré avec une valeur seuil minimale nécessaire à l'alimentation de l'automate programmable.

3. Système selon la revendication 1 ou 2, **caractérisé en ce que** le module de test est intégré au deuxième module d'alimentation électrique.

4. Système selon la revendication 3, **caractérisé en ce que** le module de test est lancé de manière cyclique par le deuxième module d'alimentation électrique.

5. Système selon l'une des revendications 1 à 4, **caractérisé en ce que** le module de test du deuxième module d'alimentation électrique comporte un module de mesure de la tension fournie par le deuxième module d'alimentation électrique et un module de comparaison de ladite tension mesurée avec au moins une valeur seuil.

6. Système selon la revendication 5, **caractérisé en ce que** la valeur seuil est déterminée en fonction du mode de fonctionnement maître ou esclave dans lequel est le deuxième module d'alimentation électrique.

7. Système selon l'une des revendications 1 à 6, **caractérisé en ce que** le premier module d'alimentation électrique comporte un module de test comprenant un module de mesure de la tension fournie par le premier module d'alimentation électrique et un module de comparaison de ladite tension mesurée avec au moins une valeur seuil.

8. Système selon la revendication 7, **caractérisé en ce que** la valeur seuil est déterminée en fonction du mode de fonctionnement maître ou esclave dans lequel est le premier module d'alimentation électrique.

## Patentansprüche

1. Stromversorgungssystem für eine speicherprogrammierbare Steuerung, welches umfasst:
- ein erstes Stromversorgungsmodul (1), das in einem Master-Modus konfiguriert ist, um der speicherprogrammierbaren Steuerung eine Versorgungsspannung zu liefern,
- ein zweites Stromversorgungsmodul (2), das in einem Slave-Modus konfiguriert ist, um im Falle eines Ausfalls des ersten Stromversorgungsmoduls der speicherprogrammierbaren Steuerung die Versorgungsspannung zu liefern,
**dadurch gekennzeichnet, dass** es aufweist:
- ein Steuerungsmodul, das dafür ausgelegt ist, zeitweilig das Umschalten des ersten Stromversorgungsmoduls (1) in den Slave-Modus und das Umschalten des zweiten Stromversorgungsmoduls (2) in den Master-Modus zu steuern,
- ein Prüfmodul, das dafür ausgelegt ist, eine Stromprüfung des zweiten Stromversorgungsmoduls (2) durchzuführen, wenn dieses in den Master-Modus umgeschaltet wird.

2. System nach Anspruch 1, **dadurch gekennzeichnet, dass** das Prüfmodul aufweist:
- ein Messmodul, das dafür ausgelegt ist, den elektrischen Strom zu messen, der von dem zweiten Stromversorgungsmodul (2) geliefert wird, wenn sich dieses im Master-Modus befindet,
- ein Vergleichsmodul zum Vergleich des gemessenen elektrischen Stroms mit einem minimalen Schwellenwert, der für die Versorgung der speicherprogrammierbaren Steuerung erforderlich ist.

3. System nach Anspruch 1 oder 2, **dadurch gekennzeichnet, dass** das Prüfmodul in das zweite Stromversorgungsmodul integriert ist.

4. System nach Anspruch 3, **dadurch gekennzeichnet, dass** das Prüfmodul von dem zweiten Stromversorgungsmodul zyklisch gestartet wird.

5. System nach einem der Ansprüche 1 bis 4, **dadurch gekennzeichnet, dass** das Prüfmodul des zweiten Stromversorgungsmoduls ein Messmodul für die von dem zweiten Stromversorgungsmodul gelieferte Spannung und ein Vergleichsmodul zum Vergleich dieser gemessenen Spannung mit wenigstens einem Schwellenwert aufweist.

6. System nach Anspruch 5, **dadurch gekennzeichnet, dass** der Schwellenwert in Abhängigkeit von der Master- oder Slave-Betriebsart bestimmt wird, in welcher sich das zweite Stromversorgungsmodul befindet.

7. System nach einem der Ansprüche 1 bis 6, **dadurch gekennzeichnet, dass** das erste Stromversorgungsmodul ein Prüfmodul aufweist, das ein Messmodul für die von dem ersten Stromversorgungsmodul gelieferte Spannung und ein Vergleichsmodul zum Vergleich dieser gemessenen Spannung mit wenigstens einem Schwellenwert aufweist.

8. System nach Anspruch 7, **dadurch gekennzeichnet, dass** der Schwellenwert in Abhängigkeit von der Master- oder Slave-Betriebsart bestimmt wird, in welcher sich das erste Stromversorgungsmodul befindet.

## Claims

1. Electrical power supply system for a programmable logic controller, comprising:
- a first electrical power supply module (1) configured to operate in a master mode in order to deliver at least one electrical supply voltage to the programmable logic controller;
- a second electrical power supply module (2) configured to operate in a slave mode in order to deliver said electrical supply voltage to the programmable logic controller in the event of failure of the first electrical power supply module;
**characterized in that** it includes:
- a control module arranged to temporarily control the switching of the first electrical power supply module (1) to slave mode and the switching of the second electrical power supply module (2) to master mode;
- a test module arranged to test the second electrical power supply module (2) in current when the latter is switched to master mode.

2. System according to Claim 1, **characterized in that** the test module includes:
- a measurement module arranged to measure the electric current delivered by the second electrical power supply module (2) when the latter is in master mode;
- a comparison module for comparing the measured electric current with a minimum threshold value required to supply power to the programmable logic controller.

3. System according to Claim 1 or 2, **characterized in that** the test module is incorporated within the second electrical power supply module.

4. System according to Claim 3, **characterized in that** the test module is started up cyclically by the second electrical power supply module.

5. System according to one of Claims 1 to 4, **characterized in that** the test module of the second electrical power supply module includes a measurement module for measuring the voltage delivered by the second electrical power supply module and a comparison module for comparing said measured voltage with at least one threshold value.

6. System according to Claim 5, **characterized in that** the threshold value is determined according to whether the second electrical power supply module is in the master or slave operating mode.

7. System according to one of Claims 1 to 6, **characterized in that** the first electrical power supply module includes a test module comprising a measurement module for measuring the voltage delivered by the first electrical power supply module and a comparison module for comparing said measured voltage with at least one threshold value.

8. System according to Claim 7, **characterized in that** the threshold value is determined according to whether the first electrical power supply module is in the master or slave operating mode.
